# EUROPEAN PATENT SPECIFICATION

(11) **EP 4 163 402 B1**
(45) Date of publication and mention of the grant of the patent: **27.08.2025**
(21) Application number: 21201451.8
(22) Date of filing: 07.10.2021
(51) Int. Cl.: C21B 13/00, C21B 13/14, F27B 1/21, F27D 11/06, F27D 99/00

(54) **INDUCTION HEATING OF DRI**
INDUKTIONSHEIZUNG VON DRI
CHAUFFAGE DE DRI PAR INDUCTION

(43) Date of publication of application: 12.04.2023
(73) Proprietor: ArcelorMittal Texas HBI LLC, Portland, TX 78374 (US)
(72) Inventor: PÜHRINGER, Jürgen, 4311 Schwertberg (AT)
(74) Representative: Lavoix

(56) References cited:
- CN-C- 1 042 346
- US-A- 6 030 434
- US-A1- 2015 329 931
- US-A1- 2021 301 360

## Description

Due to environmental issues and especially due to the release of carbon dioxide in conventional steel making processes avoidance of carbon dioxide being released becomes more and more interesting for the steel industry.

One focus lies on the production of so-called direct reduced iron (DRI). This direct reduced iron is produced from the direct reduction of an iron ore by a reducing gas or elemental carbon produced from natural gas or coal. The direct reduction of iron is a solid-state process which works below the melting point of iron. One example is a direct reduction of an iron ore in the presence of a reducing gas, the so-called Syngas, which is a mixture of hydrogen and carbon monoxide. This takes place at temperatures of 800 - 1200°C.

These direct production processes can be divided in gas-based and coal-based processes wherein in both cases, as in conventional steel making, the aim is to remove the oxygen contained in various forms as iron oxide.

Besides avoiding the release of carbon dioxides, the direct reduction process is relatively energy efficient. For example, the DRI process requires significantly less fuel than a traditional blast furnace. By using the direct reduction process, it is possible to avoid a typical integrated steel plant. For the shipping, handling and storage direct reduced iron can be brought into a briquetted form which is normally done in a high temperature process called hot briquetting providing hot briquetted iron (HBI). For the production of HBI iron ore is reduced with hydrogen or with natural gas which is much more environmentally friendly than using coke. The reduction process is carried out in a reduction tower. The tower is the heart of the plant. The direct reduction process is quite complex and includes the steps of pelletizing iron ore or using pelletized iron ore and filling them into the reactor. Converting natural gas into a reducing gas and then injecting the reducing gas into the system and circulating it in a closed system. The hot reducing gas is led through the iron ore from the bottom to the top of the reduction furnace using a counter flow principle. The iron ore is reduced, and sponge iron is produced. Afterwards, the sponge iron is pressed into briquettes in a high temperature process resulting in hot briquetted iron (HBI).

To achieve a proper density and the desired physical properties of the HBI the temperature of the feed material to the briquetting press is important. The temperature of the material arriving at the press is determined by the heat in the furnace above it, which is primarily influenced by the gas flow and temperature required for the reduction. The amount of natural gas injected below the reduction zone cools the material and adds carbon. To increase the temperature of the bed, oxygen can be injected but its use is limited by the temperature at which clustering of the material occurs. Further, carbon monoxide combined with natural gas injection into the bottom of the furnace can be used to limit the temperature drop when carbon is added but requires a complex flow sheet including hydrogen separation via methods such as pressure swing absorption (PSA), vacuum swing absorption (VSA) or other methods known in the art.

For example, the reactor zone temperature in the reduction furnace is about 850°C wherein the HDRI temperature after natural gas injection and cooling is about 650 - 680°C. After natural gas injection and cooling a number of feed channels distribute the material to the briquetting machines.

The prior art deals with various problems, for example, temperature imbalances which may result in each briquetting machine receiving material at different temperatures. The quality of the pellets influences briquetting and the thus the final HBI quality. Further, the maximum temperature of the feed material is linked to the furnace operation.

US 2021/301360 A1 describes a method of heating direct reduced iron between a direct reduced iron source and processing equipment for the direct reduced iron.

CN 1 042 346 C describes a hot pressed carboniferous ore ball direct reducing or calcining process.

It is an object of the invention to produce hot briquetted iron with more uniform properties and to provide for a process which allows for better control of the temperature of direct produced iron. It is a further object to allow for uniform material properties before feeding into the hot briquetting process.

The objects are achieved by means of the process claimed in claim 1.

Advantageous features are claimed in the dependent claims.

The inventors found that due to flow issues within the discharge system temperature imbalances arise having an impact on briquetting. Some of the material might have a very low temperature causing issues with briquetting density and resulting in lots of fine particles and chips.

Further, the recycling of hot fines to the briquetting machines cools the DRI significantly due to the screening operations.

Further, inventors saw a problem in future operations with partial hydrogen usage that the carbon formed in the reduction zone itself will decrease substantially due to the thermodynamic conditions. This in combination with the endothermic reduction reactions which cools the beds delimit the amount of carbon which can be added to the product since the maximum amount of carbon which can be added via natural gas injection in the lower furnace zone is limited by the temperature required for briquetting. A small amount of carbon in the product is important for downstream EAF operation to ensure a foaming slag, and therefore it is desired to have a residual carbon content in the product, especially when using a reduction gas containing hydrogen.

Further, the inventors took into consideration that there is no way of independently controlling the temperature of the material in the reactor and the temperature of the material going from the reactor to the briquetting press. If the temperature of the material arriving at the briquetting press needs to be increased, according to the state of the art the temperature of the entire reactor must be increased. However, this increases the risk of clustering within the furnace and decreases the energy efficiency.

The inventors therefore found that it is advantageous to increase the temperature of the DRI before it reaches the briquetting press thus not requiring adjustment of the temperature in the reactor. Further, the inventors identified the need for means of balancing the temperatures between the feed channels as well as means of heating-up the recycled fine particles before entering the briquetting press.

In order to achieve the aforesaid and to avoid the disadvantages in the state of the art, feed channels and/or hot fine particles are modified in such a way that induction heating of these materials is carried out in the feed channels to control the temperature before entering the briquetting press.

Due to this temperature control the DRI temperature is decoupled from the temperature in the reactor allowing the reactor to be run at the optimum conditions for the direct reduction. the temperature of the hot briquetting can be chosen independently with the optimum temperature for this process.

The temperature of the DRI is monitored and adjusted in an induction process which allows for controlled increase of the DRI temperature to a target temperature irrespective of the specific feed channel. Therefore, the briquetting presses are fed with DRI of the same temperature resulting in uniform properties of the briquettes.

It was found that by increasing the temperature of the DRI by 25°C the occurrence of HDI chips and fines can be decreased by several percent. This leads to an increased yield providing higher value to customers.

As a remarkable side-effect it was found that operating at a higher briquetting temperature allows to use a higher quantity of lower grade ores which may become more important in the future. Use of lower grade ore further saves costs.

Further, being able to reheat the DRI additional carbon can be added in the transition zone via natural gas and/or other carbon containing gases like biogas, thus compensating for both the loss of carbon in the reactor and cooling due to hydrogen usage.

It is preferred to use sustainable energy sources for the induction process, for instance wind and/or solar energy and/or energy from solid oxide fuel cells. In periods with not sufficient sustainable energy, stored hydrogen may be used for these fuel cells and for the direct reduction of the iron ore.

In an embodiment an induction heating device is installed around each feed channel.

In an advantageous embodiment it is recommended that the system or induction heating device for each feed channel is designed to allow for a temperature increase of up to 100°C of the DRI material. Typically, a temperature increase of 20 ºC of the DRI material is used.

In a further advantageous embodiment the induction heating device for each system of each feed channel is designed for a specific energy input of between 2 to 18 kWh/t HBI, preferably between 2 to 8 kWh/t HBI during conventional operation with higher grade ores and between 8 to 18 kWh/t HBI when operating with lower grade ores or in a hybrid mode of operation with hydrogen.

In particular the invention pertains to a process for the manufacturing of hot briquetted iron (HBI) from direct reduced iron (DRI) wherein iron ore is direct reduced in a reactor by a reducing gas consisting of natural gas and/or hydrogen and/or carbon monoxide under elevated temperatures and discharging the direct reduced iron to at least one briquetting device where briquettes are pressed from the direct reduced iron wherein the direct reduced iron is after leaving the reactor and before briquetting is heated to a target briquetting temperature.

Fines after briquetting are recovered downstream of the briquetting press and heated to a target briquetting temperature before being reintroduced to the briquetting press.

The DRI and/or the fines are heated by induction heating.

In an embodiment the DRI and the fines are heated separately or mixed together and heated together after mixing.

In an embodiment the induction heating is positioned around a duct or channel conveying the DRI or the fines or both to the briquetting press.

In an embodiment the DRI and/or the fines are heated to a temperature above 700°C and preferably between 700°C and 800°C before briquetting.

In an embodiment sustainable energy sources for the induction process are used and preferably wind energy or energy from solid oxide fuel cells is used wherein the hydrogen used for these fuel cells is from the same source as the hydrogen used for the direct reduction of the iron ore.

In an embodiment the induction heating device is designed for an energy input into the material of between 2 to 18 kWh/t HBI and preferably between 2 to 8 kWh/t HBI when treating higher grade materials and 8 to 18 kWh/t HBI when treating lower grade ores or operating in a hybrid mode of operation with hydrogen.

So for a reduction furnace with a capacity of 2 million tonnes per year and 7 feed legs, a nominal power input into the material of 75 - 700 kW per feed leg would be required.

In an embodiment the induction heating device for each feed channel is designed to allow for a temperature increase of at least 100°C or more of the DRI material wherein preferably it is designed for a temperature increase of 20-50 ºC of the DRI material when treating high grade ores in a conventional process and between 50 -100 ºC when treating lower grade materials or operating in a hybrid mode of operation with hydrogen.

The invention is hereinafter explained by way of examples and the accompanying drawings, wherein the drawing show:
- Figure 1:: The feed channel temperature in degree Fahrenheit in relation to density of the briquettes;
- Figure 2:: the relative strength of the briquettes in relation to the temperature;
- Figure 3:: the decreasing temperature of the material with higher carbon content;
- Figure 4:: a schematic view on a modified feed channel;
- Figure 5:: the percentage of chips and fines of HBI in relation to the feed channel temperature;
- Figure 6a:: the briquette density in relation to the Fe content in pellet before reduction at 700°C;
- Figure 6b:: the briquette density in relation to the Fe content in pellet before reduction at 800°C;
- Figure 7:: the comparison of the prior art with 100 % natural gas in comparison to hydrogen natural gas operation with reduced carbon content and with a desired carbon content in hydrogen/natural gas operation according to the invention;
- Figure 8:: possible installation positions, for briquetting plants, where fines resulting from the briquetting process are fed back to the DRI.

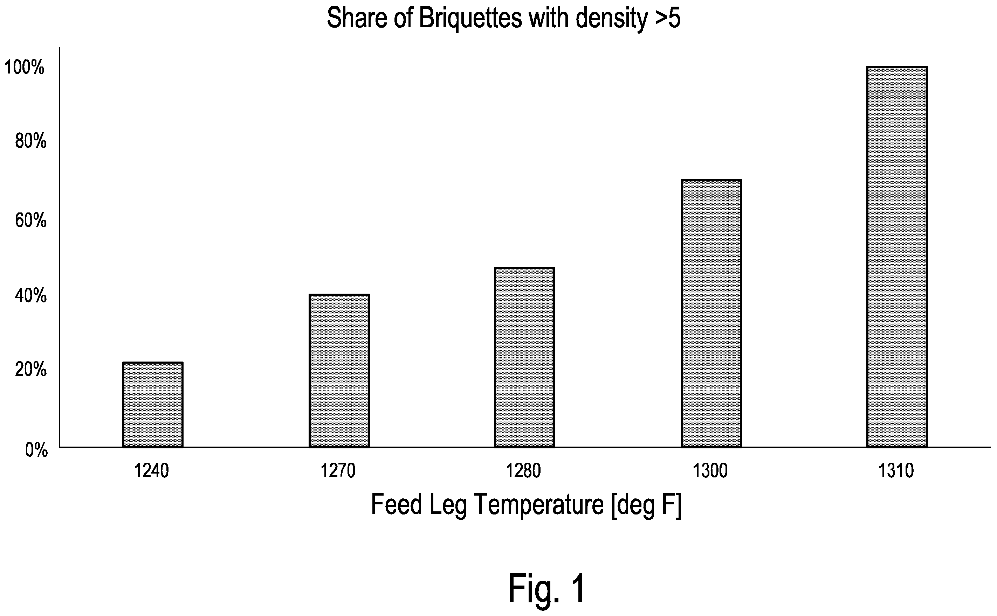

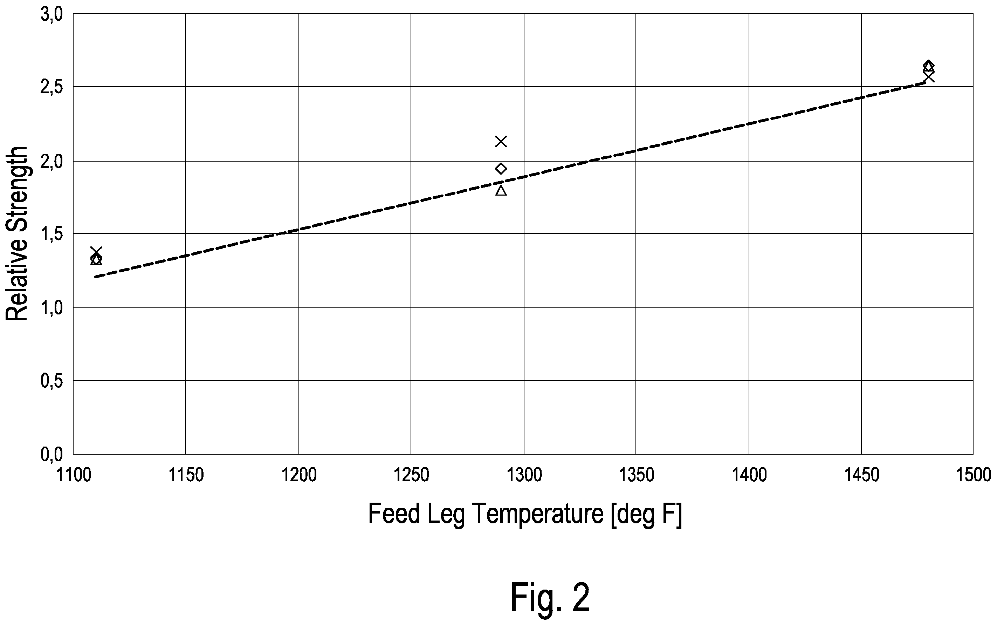

In Figure 1 the feed channel temperature in degrees Fahrenheit and the percentage of briquettes with a density above 5 t/m³ is shown. From the chart it can be derived, that the higher the feed channel temperature is, the higher the density of the briquettes is, wherein the increase in density is not linear but can be much decreased by a temperature rise of 17°C (30°F). Further, in Figure 2 the relative strength of the briquettes is shown in relation to the feed channel temperature, and it shows that higher temperatures lead to a higher relative strength.

In a process in which natural gas is introduced leading to partial hydrogen usage, the amount of carbon formed in the reduction zone itself will decrease substantially due to the thermodynamic conditions. This combined with the endothermic reduction reaction which cools the bed will limit the amount of carbon which can be added to the product since the maximum amount of carbon which can be added via natural gas injected into the lower furnace zone will be limited by the temperature required for briquetting.

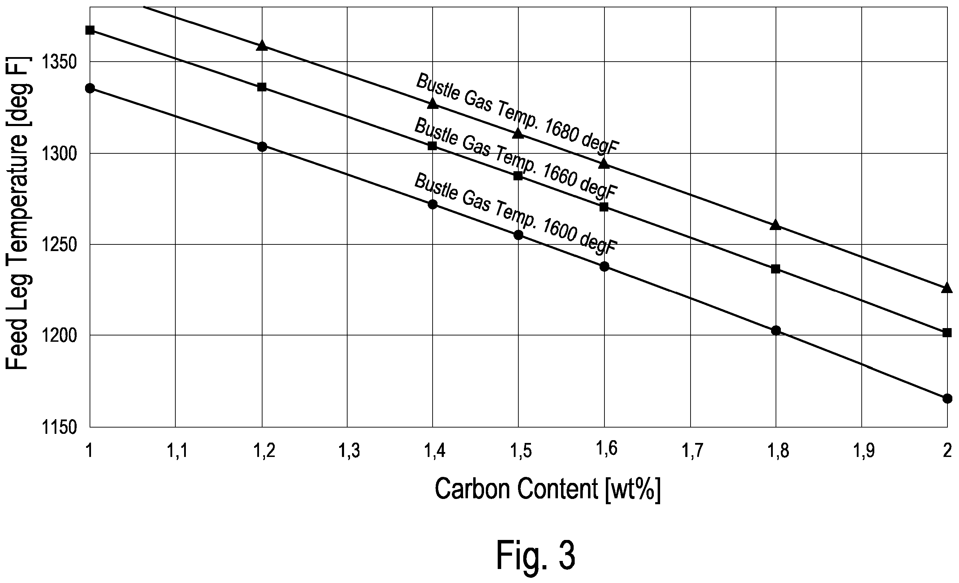

In Figure 3 this can be clearly seen as the higher the carbon content the lower is the material temperature in the feed channel, which is lower than the values shown in Figures 1 and 2 for a sufficient density and sufficient relative strength of the briquettes.

The invention aims to solve the problem of the different temperatures originating from on one hand the DRI reactor being operated in the best mode, with a higher hydrogen content in the reducing gas and introducing carbon by injection of natural gas and on the other hand operating the briquetting so that briquettes can be formed with sufficient strength and density.

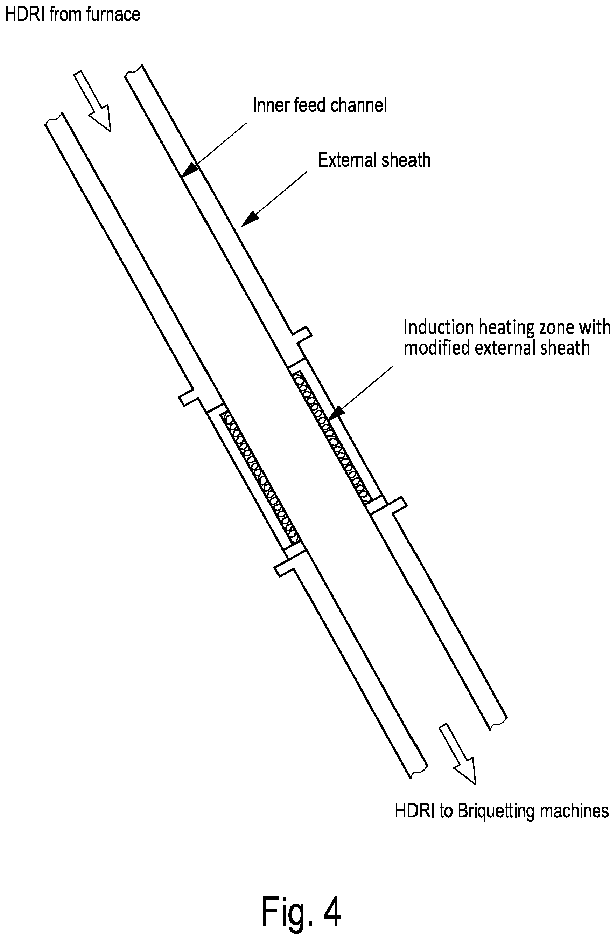

According to Figure 4 this is achieved by induction heating of the DRI or sponge iron in the feed channel to the briquetting machine so that the sponge iron or DRI can be adjusted to an ideal temperature which normally lies above 704.4°C (1300°F).

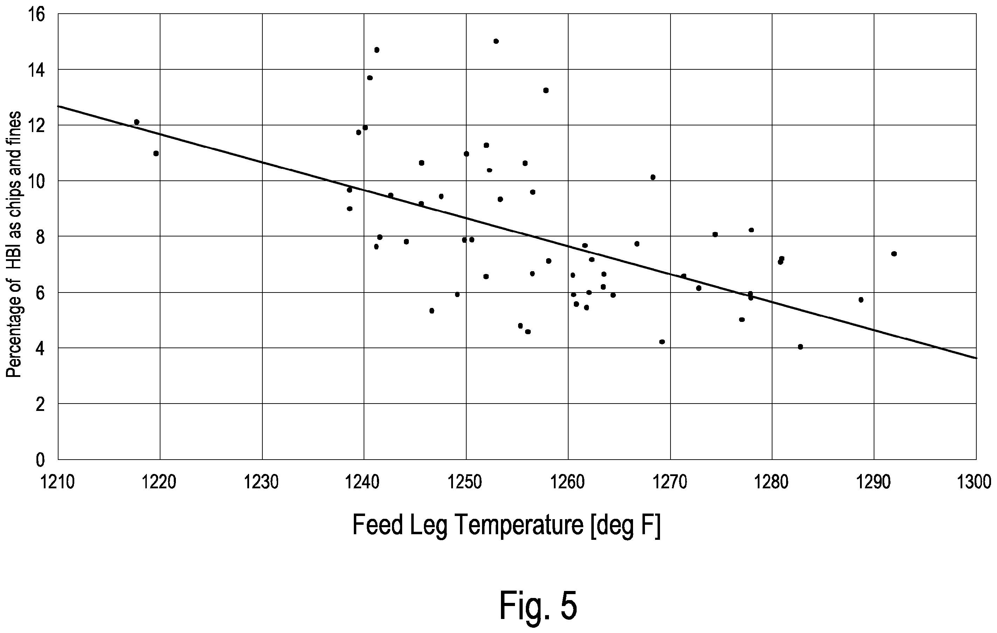

As it can be seen in Figure 5 the amount of chips and fines in the production of the briquettes can be decreased considerably by a temperature increase of only 25°C. This is due to the fact, that by increasing the temperature, the density as well as the strength of the briquettes can be enhanced.

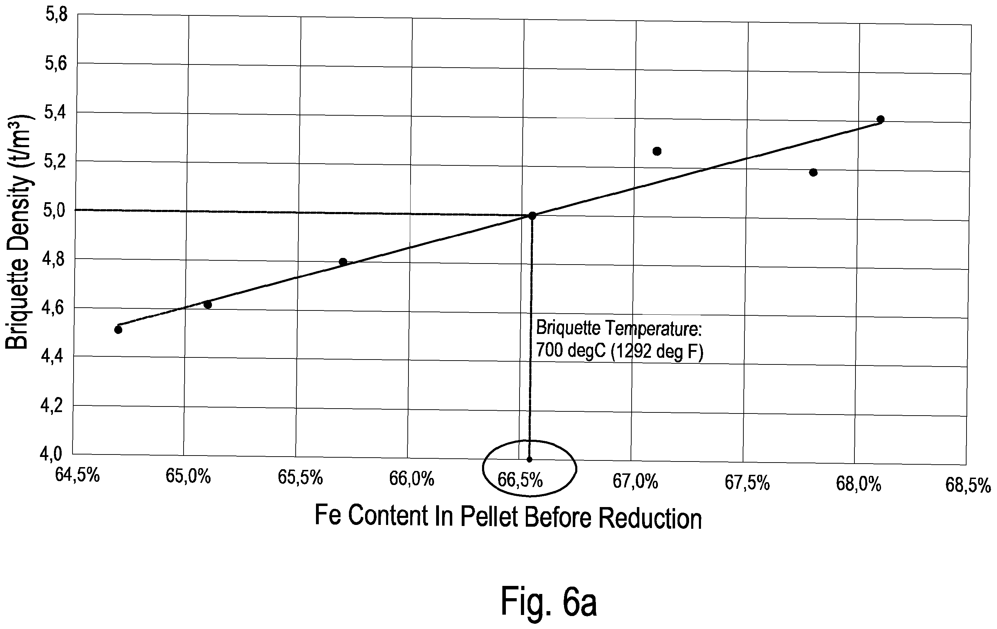

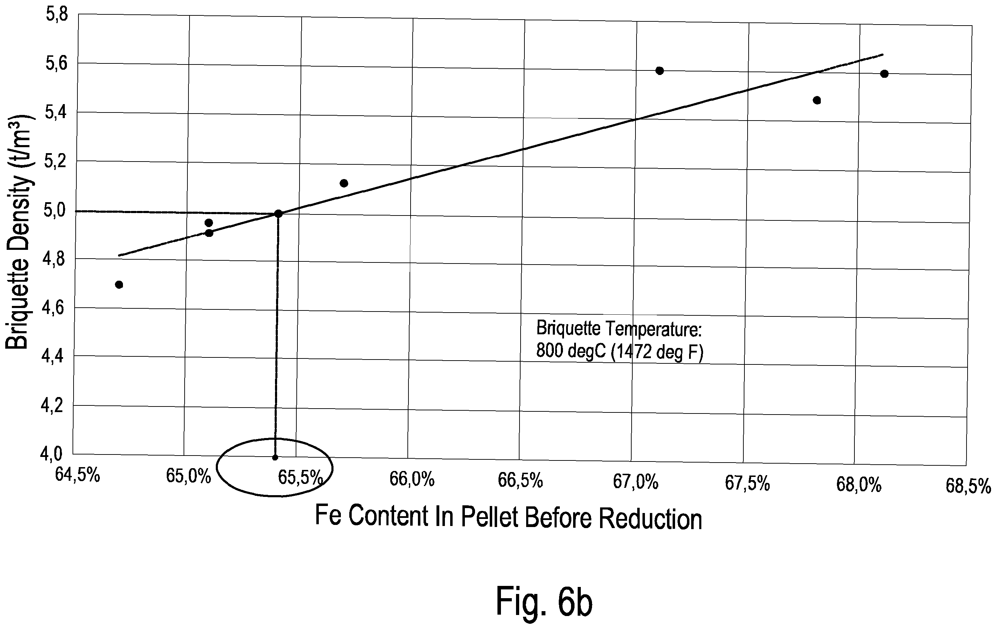

The pellet grade limitation with the current feed channel temperatures is shown in comparison to the higher feed channel temperatures according to the invention. As a further advantage it was found that an iron ore with an Fe-content in the ore pellets before the reduction of about 66.5 % lead to the required briquette density of 5 tons per m³. This is achieved normally at a briquette temperature of 700°C (1292°F) (Fig. 6a). It was found that by rising the briquetting temperature by 100°C to 800°C (1472°F) (Fig. 6b), the same density can be achieved with an iron ore with a remarkable lower Fe-content allowing the use of a higher quantity of lower grade ores which can be important in the future and provides cost advantages.

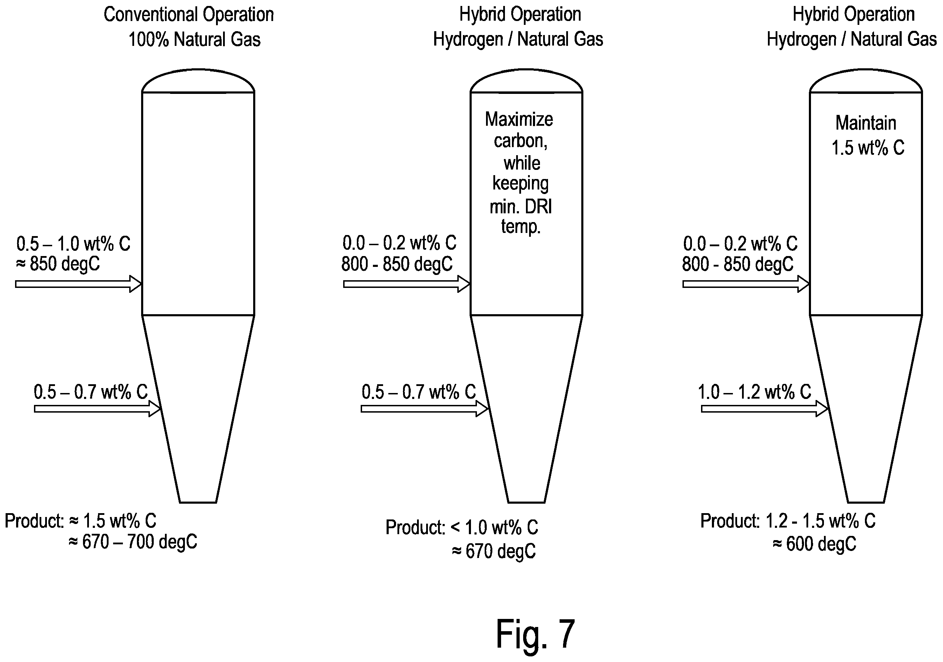

In Figure 7 three different operating systems for operating the reactor are shown. On the left side the current situation is shown wherein 100 % natural gas is used for reforming to produce a syn gas for reduction into the reactor. As it can be seen the product has a carbon content of about 1.5 weight-% and the operating temperature of the DRI is about 670 - 700°C. In the middle a hydrogen/natural gas mixed operation is shown with a maximum carbon content while keeping the DRI temperature at a minimum of about 670°C. In this case the product has a carbon content below 1 wt-%.

On the right a hydrogen/natural gas mixed operation is shown. The operating conditions are shown in the middle but the carbon content should be kept at about 1.5 wt.%, which is required for the product. The operating conditions shown in the middle picture do not achieve a high enough carbon content. Achieving a carbon content of about 1.2 - 1.5 wt-% is possible at a temperature of the DRI of 600°C which is too cold for briquetting.

According to the present invention, the operation route which is shown on the right can be chosen, so that a product with a sufficient carbon content is obtained. The lower output temperature from the reactor is compensated according to the invention by induction heating of the DRI before briquetting. In a preferred embodiment the induction heating of the DRI is performed in the feed channel from the reactor to the briquetting machine. It is advantageous to design the induction heating system to allow for a temperature increase of at least 100°C or more of the DRI material. It can be sufficient to allow for an increase in temperature of up to 100°C of the DRI material. It is expected that during typical operation the increase of the material temperature by 20°C is sufficient.

For the purpose of sufficient heating of DRI the temperature of the DRI can be monitored before reaching the induction heating zone and if required heated up to a predetermined temperature. This allows that all materials of all feed channels arrive at the briquetting machines at the predetermined temperature.

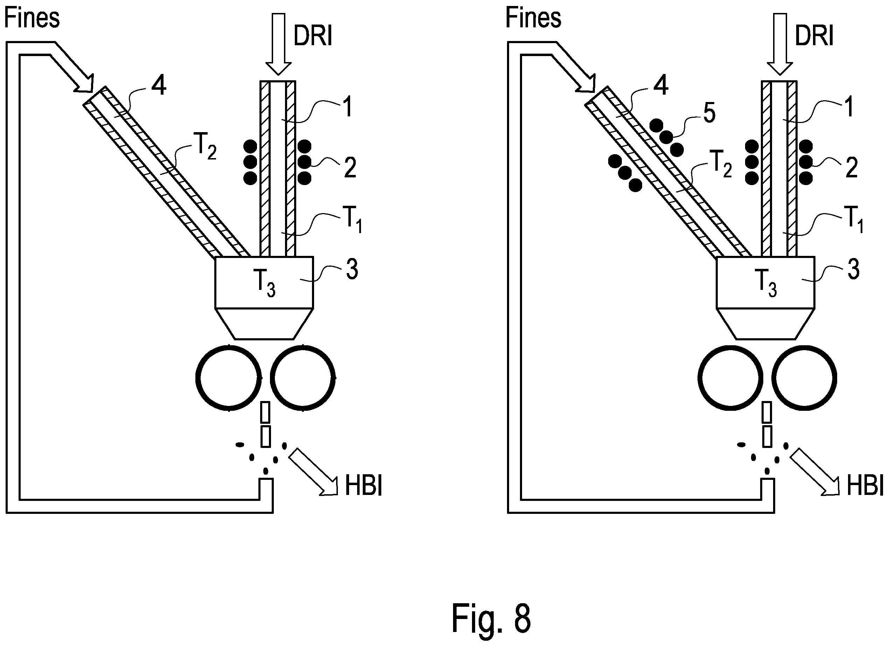

Figure 8 shows different installation possibilities of induction heating shown for briquetting plants where fines are fed back to the briquetting machine. Due to the differences in temperature between the DRI (Temperature T1) and the fines (Temperature T2), the resulting DRI/fines mixture temperature (Temperature T3) depends on the relative amounts of fine recycled and the temperature of both the incoming DRI and the fines. In the first example, only the temperature of the DRI is adjusted (2) to control the temperature of the mixture of DRI and fines which is fed into the briquetting press. In the second example, an additional heating source (5) is installed on the fines recycling line in order to allow for the control of the temperature of the DRI and the fines independently.

Induction heating is the heating method as induction heating has a high degree of efficiency. In addition, a high mass flow of DRI or sponge iron material can be treated very effectively. The electric power needed for that induction heating can be derived from sustainable energy sources so that the overall process is already more environmentally friendly than conventional steel making.

For example, for the production of the electric energy for the induction heating the same hydrogen source can be used as for the reduction or electrical energy form wind energy or the like can be used. Further, feed channel pipes can be easily adapted to an induction heating process by arranging induction coils on the pipes which is much easier achieved and safer than for example heating by combustible energy sources.

The expected energy input into the material for the required temperature increase may be between 2- 18 kWh/t HBI, with an expected range of 2 - 8 kWh/t HBI when treating higher grade materials and a range of 8 to 18 kWh/t HBI when treating lower grade ores or operating in a mixed hydrogen/natural gas operation mode.

## Claims

1. Process for the manufacturing of hot briquetted iron (HBI) from direct reduced iron (DRI) wherein iron ore is direct reduced in a reactor by a reducing gas consisting of natural gas and/or hydrogen and/or carbon monoxide under elevated temperatures and the direct reduced iron is discharged to at least one briquetting device where briquettes are pressed from the direct reduced iron,
wherein the direct reduced iron is heated to a target briquetting temperature after leaving the reactor and before briquetting, and wherein fines after briquetting are recovered downstream of the briquetting press and heated to a target briquetting temperature before being reintroduced to the briquetting press, and
wherein the DRI and/or the fines are heated by induction heating.

2. Process according to claim 1, wherein the DRI and the fines are heated separately or mixed together and heated together after mixing.

3. Process according to claim 1 or claim 2, wherein the induction heating is positioned around a duct or channel conveying the DRI or the fines or both to the briquetting press.

4. Process according to any one of claims 1 to 3, wherein sustainable energy sources for the induction process are used and preferably wind and/or solar energy and/or energy from solid oxide fuel cells is used wherein the hydrogen used for these fuel cells is from the same source as the hydrogen used for the direct reduction of the iron ore.

5. Process according to one of claims 1 to 4, wherein the induction heating device is designed for an energy input into the DRI of about 2 - 18 kWh/t HBI.

6. Process according to one of claims 1 to 5, wherein the induction heating device for each feed channel is designed to allow for a temperature increase of up to 100°C of the DRI material.

7. Process according to any one of claims 1 to 5, wherein the induction heating device for each feed channel is designed for a temperature increase of 20 ºC of the DRI material when treating higher grade materials and for a temperature increase of 50 to 100ºC when treating lower grade ores or operating in a hybrid mode of operation with hydrogen.

8. Process according to one of the preceding claims, wherein the DRI is heated to a temperature above 700°C and preferably between 700 and 750 °C when processing higher grade ores during conventional operation and between 750 and 800 °C when using lower grade raw materials or operating in a hybrid mode of operation with hydrogen.

## Patentansprüche

1. Verfahren zur Herstellung von heißbrikettiertem Eisen (HBI) aus direkt reduziertem Eisen (DRI), wobei Eisenerz in einem Reaktor durch ein aus Erdgas und/oder Wasserstoff und/oder Kohlenmonoxid bestehendes Reduktionsgas bei erhöhten Temperaturen direkt reduziert wird und das direkt reduzierte Eisen in mindestens eine Brikettiervorrichtung ausgetragen wird, wo aus dem direkt reduzierten Eisen Briketts gepresst werden,
wobei das direkt reduzierte Eisen nach Verlassen des Reaktors und vor Brikettieren auf eine Soll-Brikettierungstemperatur erhitzt wird und wobei Feinanteile nach Brikettieren stromabwärts von der Brikettierpresse zurückgewonnen und auf eine Soll-Brikettierungstemperatur erhitzt werden, bevor sie wieder in die Brikettierpresse eingeleitet werden, und
wobei das DRI und/oder die Feinanteile durch Induktionsheizung erhitzt werden.

2. Verfahren nach Anspruch 1, wobei das DRI und die Feinanteile separat oder zusammen gemischt erhitzt werden und nach dem Mischen zusammen erhitzt werden.

3. Verfahren nach Anspruch 1 oder Anspruch 2, wobei die Induktionsheizung um eine Leitung oder einen Kanal angeordnet ist, die/der das DRI oder die Feinanteile oder beides zu der Brikettierpresse befördert.

4. Verfahren nach einem der Ansprüche 1 bis 3, wobei nachhaltige Energiequellen für den Induktionsprozess verwendet werden und vorzugsweise Wind- und/oder Solarenergie und/oder Energie aus Festoxid-Brennstoffzellen verwendet wird, wobei der für diese Brennstoffzellen verwendete Wasserstoff aus der gleichen Quelle stammt wie der für die direkte Reduktion des Eisenerzes verwendete Wasserstoff.

5. Verfahren nach einem der Ansprüche 1 bis 4, wobei die Induktionsheizvorrichtung für einen Energieeintrag in das DRI von etwa 2-18 kWh/t HBI konstruiert ist.

6. Verfahren nach einem der Ansprüche 1 bis 5, wobei die Induktionsheizvorrichtung für jeden Zuführkanal konstruiert ist, um einen Temperaturanstieg des DRI-Materials um bis zu 100 °C zu ermöglichen.

7. Verfahren nach einem der Ansprüche 1 bis 5, wobei die Induktionsheizvorrichtung für jeden Zufuhrkanal für einen Temperaturanstieg des DRI-Materials um 20 °C bei der Behandlung höherwertiger Materialien und für einen Temperaturanstieg um 50 bis 100 °C bei der Behandlung minderwertiger Erze oder bei einem Betrieb in einer Hybridbetriebsart mit Wasserstoff konstruiert ist.

8. Verfahren nach einem der vorherigen Ansprüche, wobei das DRI auf eine Temperatur von über 700 °C und vorzugsweise zwischen 700 und 750 °C erhitzt wird, wenn höherwertige Erze im konventionellen Betrieb verarbeitet werden, und zwischen 750 und 800 °C, wenn minderwertige Rohstoffe verwendet werden oder bei einem Betrieb in einem Hybridmodus mit Wasserstoff.

## Revendications

1. Procédé de fabrication de fer briqueté à chaud (HBI) à partir de fer de réduction directe (DRI) dans lequel le minerai de fer est réduit directement dans un réacteur par un gaz réducteur composé de gaz naturel et/ou d'hydrogène et/ou de monoxyde de carbone à des températures élevées et le fer de réduction directe est déchargé dans au moins un dispositif de briquetage où des briquettes sont pressées à partir du fer de réduction directe,
dans lequel le fer de réduction directe est chauffé à une température de briquetage cible après avoir quitté le réacteur et avant le briquetage, et dans lequel les fines après le briquetage sont récupérées en aval de la presse à briqueter et chauffées à une température de briquetage cible avant d'être réintroduites dans la presse à briqueter, et
dans lequel le DRI et/ou les fines sont chauffés par induction.

2. Procédé selon la revendication 1, dans lequel le DRI et les fines sont chauffés séparément ou mélangés ensemble et chauffés ensemble après le mélange.

3. Procédé selon la revendication 1 ou la revendication 2, dans lequel le chauffage par induction est placé autour d'un conduit ou d'un canal acheminant le DRI ou les fines, ou les deux, vers la presse à briqueter.

4. Procédé selon l'une quelconque des revendications 1 à 3, dans lequel des sources d'énergie durables sont utilisées pour le procédé d'induction et, de préférence, de l'énergie éolienne et/ou solaire et/ou de l'énergie provenant de piles à combustible à oxyde solide, dans lequel l'hydrogène utilisé pour ces piles à combustible provient de la même source que l'hydrogène utilisé pour la réduction directe du minerai de fer.

5. Procédé selon l'une quelconque des revendications 1 à 4, dans lequel le dispositif de chauffage par induction est conçu pour un apport d'énergie dans le DRI d'environ 2 à 18 kWh/t HBI.

6. Procédé selon l'une quelconque des revendications 1 à 5, dans lequel le dispositif de chauffage par induction pour chaque canal d'alimentation est conçu pour permettre une augmentation de température du matériau DRI pouvant aller jusqu'à 100 °C.

7. Procédé selon l'une quelconque des revendications 1 à 5, dans lequel le dispositif de chauffage par induction pour chaque canal d'alimentation est conçu pour une augmentation de température de 20 °C du matériau DRI lors du traitement de matériaux de qualité supérieure et pour une augmentation de température de 50 à 100 °C lors du traitement de minerais de qualité inférieure ou d'un fonctionnement en mode hybride avec de l'hydrogène.

8. Procédé selon l'une des revendications précédentes, dans lequel le DRI est chauffé à une température supérieure à 700 °C, de préférence entre 700 et 750 °C lors du traitement de minerais de qualité supérieure dans le cadre d'un fonctionnement conventionnel, et entre 750 et 800 °C lors de l'utilisation de matières premières de qualité inférieure ou d'un fonctionnement en mode hybride avec de l'hydrogène.
